# EUROPEAN PATENT APPLICATION

(11) **EP 1 115 255 A1**
(43) Date of publication of application: **11.07.2001**
(21) Application number: 00100041.3
(22) Date of filing: 04.01.2000
(51) Int. Cl.: H04N 9/31

(54) **Liquid crystal projector with two light sources**

(71) Applicant: CTX Opto-Electronics Corporation, Hsinchu, R.O.C. (TW); RAYTHEON COMPANY, Midland, Ontario L4R 5B8 (CA)
(72) Inventor: Lin, Falcon, c/o CTX Opto-Electronics Corporation, Hsinchu (TW); Kang, Clark, c/o CTX Opto-Electronics Corporation, Hsinchu (TW); Zhang, Jing-yun, c/o Raytheon Company, Midland, Ontario L4R 5B8 (CA); Doshi, Rekha, c/o Raytheon Company, Midland, Ontario L4R 5B8 (CA)
(74) Representative: TER MEER STEINMEISTER & PARTNER GbR

(57) **Abstract**

A liquid crystal projector with two light sources is provided, which can efficiently utilize the space of liquid crystal projector and increase the illumination of the liquid crystal projector. The liquid crystal projector comprises a light module and an optical module. The light module comprises two lamp/reflector assemblies positioned side by side separated from each other by a gap, a set of lens arrays, including two front lens arrays positioned close to each lamp/reflector assembly in its optical path and a rear lens array positioned at a distance away from the front lens arrays in the optical path, two pairs of optical prisms, positioned between the front and rear lens arrays in the optical path to refract the light into the rear lens array substantially parallel; a light polarizing element, positioned at a distance away from the rear lens array to polarize the light from the rear lens array into P or S polarized light; and a condenser lens positioned behind the rear lens array at a short distance to provide uniform illumination on the LCD panels in the optical module.

## Description

### BACKGROUND OF THE INVENTION

### 1. Field of the Invention

The present invention relates to a liquid crystal projector (hereinafter LCD), and in particular to a liquid crystal projector with two light sources.

### 2. Description to a related art

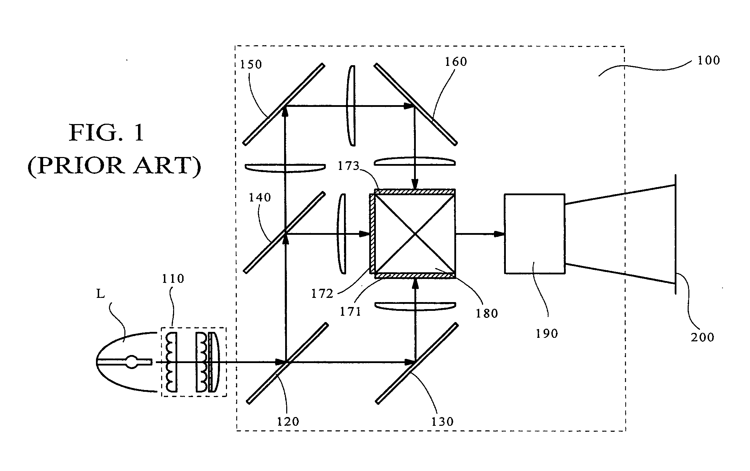

Referring to FIG 1, it shows the optical structure of a prior art liquid crystal projector. The conventional liquid crystal projector comprises a light source L, a light polarized and uniformed module 110 and an optical module 100. The light polarized and uniformed module 110 is used to polarize the beam transmitted from the light source L into polarized light, P or S wave component light, and to uniform the polarized light. The optical module 100 comprises two color separating filters 120 and 140, three full reflection mirrors 130, 150 and 160, three LCD panels 171, 172 and 173, a color mixer 180, and a projection lens 190. The first color separating filter 120 is used to pass the red light of the polarized light and reflect other color light of the polarized light. The first full reflection mirror 130 is used to reflect the red light passing through the first color separating filter 120 onto the first LCD panel 171. The second color separating filter 140 is used to reflect the green light of the light reflected from the first color separating filter 120 onto the second LCD panel 172 and pass blue light. The second and third full reflection mirrors 150, 160 are used to reflect the blue light onto the third LCD panel 173. The color mixer 180 mixes the red, green and blue light passing through the first, second, and third LCD panels 171, 172 and 173. Then the projection lens 190 projects the light transmitted from the color mixer 180 onto a screen 200.

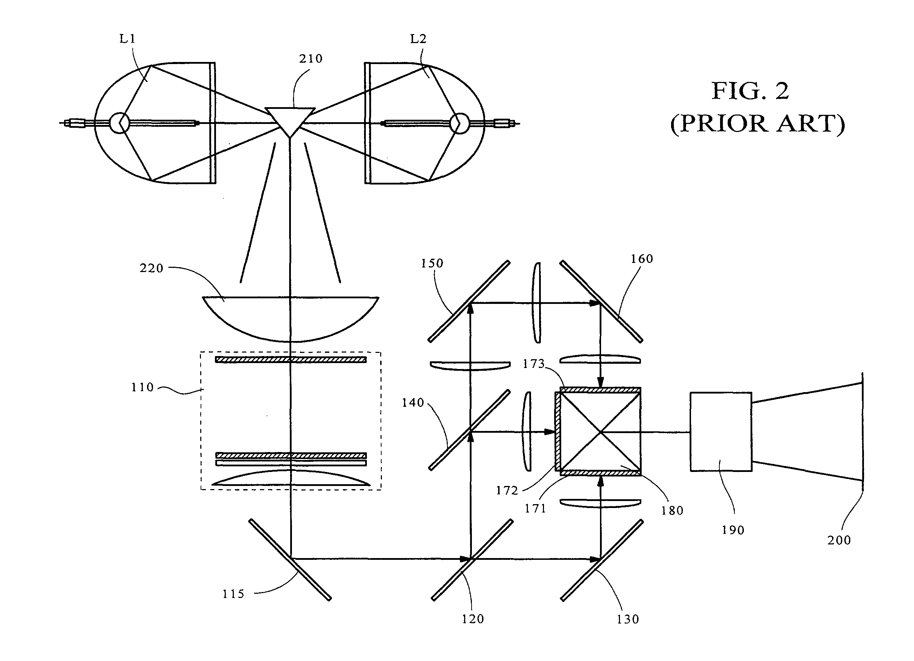

As mentioned above, the liquid crystal projector using single light source is suitable at small-size or medium-size conference room due to the limitation of illumination, for example portable liquid crystal projector. But in the large-size conference room, the screen and distance are larger than that in small or medium-size conference room, so the liquid crystal projector need to provide higher illumination to project image onto a large screen to let audience see the image clearly. Therefore, the liquid crystal projector with single light source is not suitable at large-size conference room. Thus, a liquid crystal projector with two light sources is provided. FIG. 2 shows such projector with the two lamps. As shown in figure, the light module of the liquid crystal projector includes two light sources L1, L2, a light merge prism 210, and a collimator lens 220. The light merge prism 210 reflects downward the two light beams transmitted from the left and the right light sources L1, L2, into a single light beam. The single light beam is converted into parallel light via the collimator lens 220. Therefore, the liquid crystal projector can provide higher illumination by using two light sources.

However, in the two light sources of the liquid crystal projector mentioned above, the light beams do not illuminate parallel, but focus on the prism 210 by reflecting lampshade. Therefore, some of the light reflected by the reflecting lampshade at the rear of the light source will illuminate onto the electrode of the light source. The radiative heat will raise the temperate of electrode. Generally, the lamp in liquid crystal projector employs molybdenum as the electrode, but the heatproof extent is not high, therefore it is easy to oxidize and sever if heat consumption is not well. Accordingly, the light source mentioned above will generate the question of heat consumption.

Furthermore, the liquid crystal projector with two light sources mentioned above utilizes the prism 210 to merge the light illuminated from the left and right light sources L1 and L2, and then converts into parallel beam by the collimator lens 220. Because the light beam illuminated from the light source must be converted into useful parallel beam via the prism 210 and the collimator lens 220, it is necessary to increase more space to match the disposition. Therefore the space does not effectively be used.

Besides, due to the mechanism of light source, even two light sources are disposed closely, there is a gap between two light beams.

### SUMMARY OF THE INVENTION

It is an object of this present invention to provide a liquid crystal projector with two light sources, which can raise the brightness.

It is another object of this present invention to provide a liquid crystal projector with two light sources, which can offer an emergency resolution.

It is a further object of this present invention to provide a liquid crystal projector with two light sources, which can increase the lamp life and minimize the energy consumption.

A liquid crystal projector with two light sources comprises a light module and an optical module. The optical module comprises a plurality of reflection mirrors, a plurality of color separating filters, three LCD panels, a color mixer and a projection lens. The light module comprises two lamp/reflector assemblies positioned side by side separated from each other by a gap, whose the directions of output light propagation are substantially parallel; a set of lens arrays, including two front lens arrays positioned close to each lamp/reflector assembly in its optical path and a rear lens array positioned at a distance away from the front lens arrays in the optical path; two pairs of optical prisms, including two front optical prisms and two rear optical prisms, positioned between the front and rear lens arrays in the optical path to refract the light into the rear lens array substantially parallel; a light polarizing element, positioned at a distance away from the rear lens array to polarize the light from the rear lens array into P or S polarized light; and a condenser lens positioned behind the rear lens array at a short distance to provide uniform illumination to the optical module.

### BRIEF DESCRIPTION OF THE DRAWINGS

These and other objects and advantages of the present invention will become apparent by reference to the following description and accompanying drawings wherein:

FIG.1 is an optical path view showing a conventional liquid crystal projector with single light source.

FIG.2 is an optical path view showing a conventional liquid crystal projector with two light sources.

FIG.3 is a view showing a liquid crystal projector with two light sources of a first embodiment according to the present invention.

FIG.4 is a view showing a liquid crystal projector with two light sources of a second embodiment according to the present invention.

FIG.5 is a view showing a liquid crystal projector with two light sources of a third embodiment according to the present invention.

FIG.6 is a view showing a liquid crystal projector with two light sources of a forth embodiment according to the present invention.

FIG.7 is a view showing a liquid crystal projector with two light sources of a fifth embodiment according to the present invention.

FIG. 8 is a view showing a liquid crystal projector with two light sources of a sixth embodiment according to the present invention.

### DETAILED DESCRIPTION OF THE PREFERRED EMBODIMENTS

A preferred embodiment of the invention is described below. This embodiment is merely exemplary. Those skilled in the art will appreciate that changes can be made to the disclosed embodiment without departing from the spirit and scope of the invention.

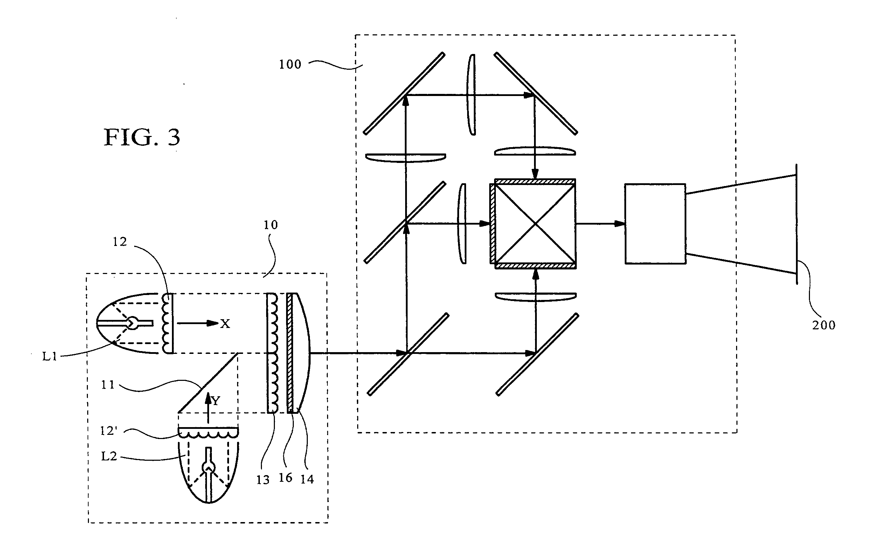

Referring to FIG 3, it is a view showing the liquid crystal projector with two light sources of a first embodiment according to the present invention. The liquid crystal projector comprises a light module 10 and an optical module 100. The optical module 100 comprises three reflection mirrors, two color separating mirrors, three LCD panels, a color. mixer and a projection lens. The function of the optical module 100 is similar with the prior art projector mentioned above, so the detailed description is neglected. On the other hand, the light module 10 comprises two lamp/reflector assemblies L1 and L2, two front lens arrays 12 and 12' positioned close to each lamp/reflector assemblies L1 and L2 in its optical path, a rear lens array 13 positioned at a distance away from the front lens arrays 12 and 12' in the optical path, a reflection mirror 11 positioned in the optical path between the front lens array 12' and the rear lens array 13 to reflect the light into the rear lens array 13, and a light polarizing element 16 and a condenser lens 14 positioned behind the rear lens array 13 at a short distance to provide polarized and uniform illumination to the optical module 100.

The lamp/reflector assemblies L1 and L2 in this embodiment are disposed such that their directions of output light propagation are substantially orthogonal. That is, the lamp/reflector assembly L1 illuminates its light toward X direction and the lamp/reflector assembly L2 illuminates its light toward Y direction, as shown in FIG. 3. The light generated from the lamp/reflector assembly L1 passes through the front lens array 12 and then is illuminated directly onto the upper part of the rear lens array 13. On the other hand, the light generated from the lamp/reflector assembly L2 passes through the front lens array 12' and then is reflected onto the lower part of the rear lens array 13 by the reflection mirror 11. The two light beams illuminated onto the rear lens array 13 are combined to form a larger light beam. The larger light beam is then illuminated to the optical module 100 via the light polarizing element 16 and the condenser lens 14. The front lens arrays 12 and 12'and the rear lens array 13 are used to uniform the light generated from the lamp/reflector assemblies L1 and L2. The structure of the front lens arrays 12, 12' and the rear lens array 13 should match the size of the LCD panels in the optical module 100.

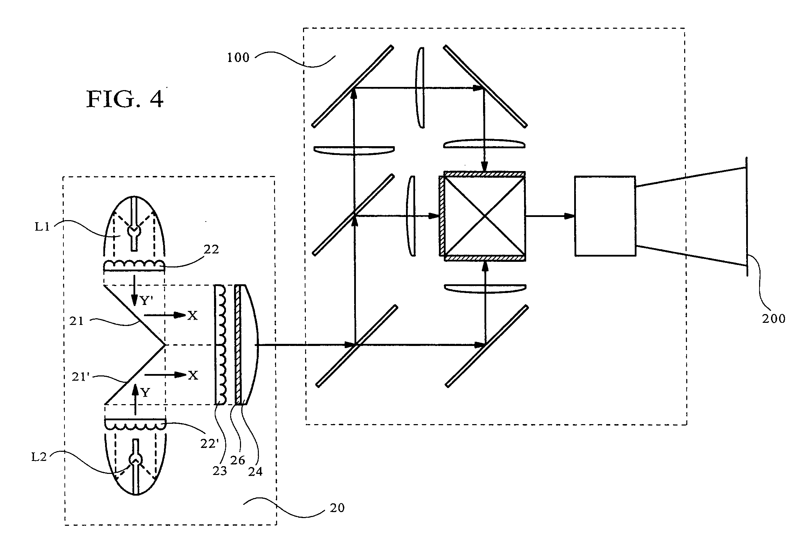

Referring to FIG. 4, it is a view showing the liquid crystal projector with two lamp/reflector assemblies of a second embodiment according to the present invention. The liquid crystal projector comprises a light module 20 and an optical module 100. The light module 20 comprises two lamp/reflector assemblies L1 and L2, two front lens arrays 22 and 22' positioned close to each lamp/reflector assemblies L1 and L2 in its optical path, a rear lens array 23 positioned at a distance away from the front lens arrays 22 and 22' in the optical path, two reflection mirrors 21 and 21' positioned in the optical path between the front lens arrays 22 and 22' and the rear lens arrays 23 to reflect the light into the rear lens array 23, and a light polarizing element 26 and a condenser lens 24 positioned behind the rear lens array 23 at a short distance to provide polarized and uniform illumination to the optical module 100.

The lamp/reflector assemblies L1 and L2 in this embodiment are disposed such that their directions of output light propagation are substantially opposite. That is, the lamp/reflector assembly L1 illuminates its light toward Y' direction and the lamp/reflector assembly L2 illuminates its light toward Y direction, as shown in FIG. 4. The light generated from lamp/reflector assembly L1 passes through the front lens array 22 and then is reflected onto the upper part of the rear lens array 23 by the reflection mirror 21. On the other hand, the light generated from lamp/reflector assembly L2 passes through the front lens array 22' and then is reflected onto the lower part of the rear lens array 23 by the reflection mirror 21'. The two light beams illuminated onto the rear lens array 23 are combined to form a larger light beam. The larger light beam is then illuminated to the optical module 100 via the light polarizing element 26 and the condenser lens 24. The function of the lens arrays 22, 22' and 23 are similar with function of the lens arrays in the first embodiment.

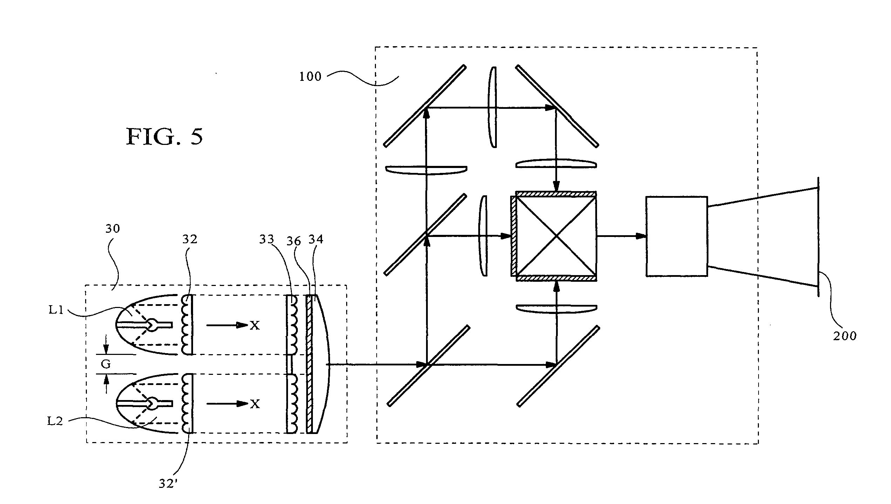

Referring to FIG. 5, it is a view showing the liquid crystal projector with two lamp/reflector assemblies of a third embodiment according to the present invention. The liquid crystal projector comprises a light module 30 and an optical module 100. The light module 30 comprises two lamp/reflector assemblies L1 and L2, two front lens arrays 32 and 32' positioned close to each lamp/reflector assemblies L1 and L2 in its optical path, a rear lens array 33 positioned at a distance away from the front lens arrays 32 and 32' in the optical path, and a light polarizing element 36 and a condenser lens 34 positioned behind the rear lens array 33 at a short distance to provide polarized and uniform illumination to the optical module 100.

The lamp/reflector assemblies L1 and L2 in this embodiment are disposed such that their directions of output light propagation are substantially parallel. That is, both two lamp/reflector assemblies L1 and L2 illuminate their light toward X direction, as shown in FIG. 5. The light generated from the two lamp/reflector assemblies L1 and L2 pass through the front lens arrays 32, 32' and then illuminate onto the rear lens array 33 directly. The two light beams illuminated onto the rear lens array 33 are combined to form a larger light beam. The larger light beam is then illuminated to the optical module 100 via the light polarizing element 36 and the condenser lens 34. The function of the lens arrays 32, 32' and 33 are similar with function of the lens arrays in the first embodiment. Due to the fact that there is a gap G between the two lamp/reflector assemblies L1 and L2, the rear lens array 33 responding to the gap G may not have lens array.

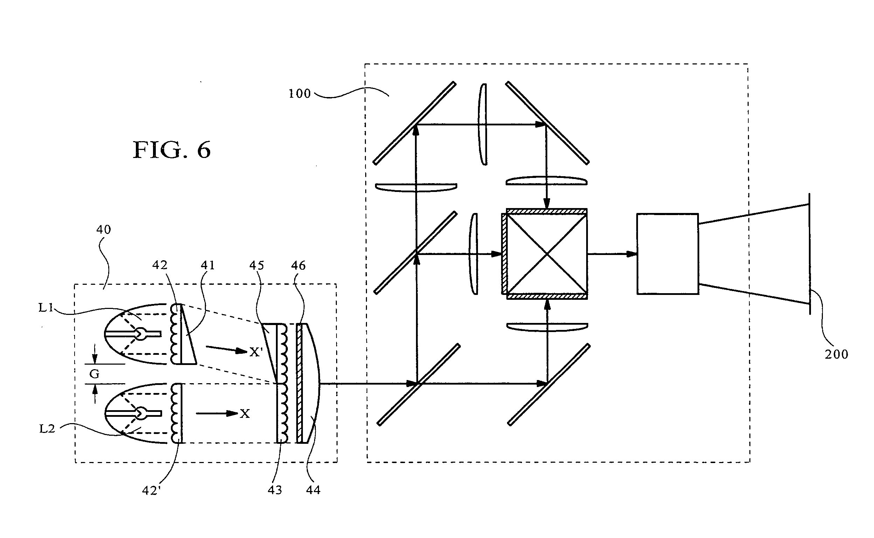

Referring to FIG. 6, it is a view showing the liquid crystal projector with two lamp/reflector assemblies of a forth embodiment according to the present invention. The liquid crystal projector comprises a light module 40 and an optical module 100. The light module 40 comprises two lamp/reflector assemblies L1 and L2, two front lens arrays 42 and 42' positioned close to each lamp/reflector assemblies Ll and L2 in its optical path, a rear lens array 43 positioned at a distance away from the front lens arrays 42 and 42' in the optical path, a pair of optical prisms, a front optical prism 41 and a rear optical prism 45, positioned between the front lens array 42 and the rear lens array 43, and a light polarizing element 46 and a condenser lens 44 positioned behind the rear lens array 43 at a short distance to provide polarized and uniform illumination to the optical module 100.

The lamp/reflector assemblies L1 and L2 in this embodiment are disposed such that their directions of output light propagation are substantially parallel. That is, both two lamp/reflector assemblies L1 and L2 illuminate their light toward X direction, as shown in FIG. 6. The light generated from the lamp/reflector assembly L1 passes through the front lens array 42 and then is refracted toward the X' direction via the front optical prism 41. The refracted light is refracted again toward the X direction via the rear optical prism 45 and illuminates onto the upper part of the rear lens array 43. The light generated from the lamp/reflector assembly L2 passes through the front lens array 42' and then illuminates onto the lower part of the rear lens array 43 directly. The two light beams illuminated onto the rear lens array 43 are combined to form a larger light beam. The larger light beam is then illuminated to the optical module 100 via the light polarizing element 46 and the condenser lens 44. The function of the lens arrays 42, 42' and 43 are similar with the function of the lens arrays in the first embodiment. Due to there is a gap G between the two lamp/reflector assemblies L1 and L2, the light module 40 connects the two light beams at a predefine position by the pairs of optical prisms 41 and 45.

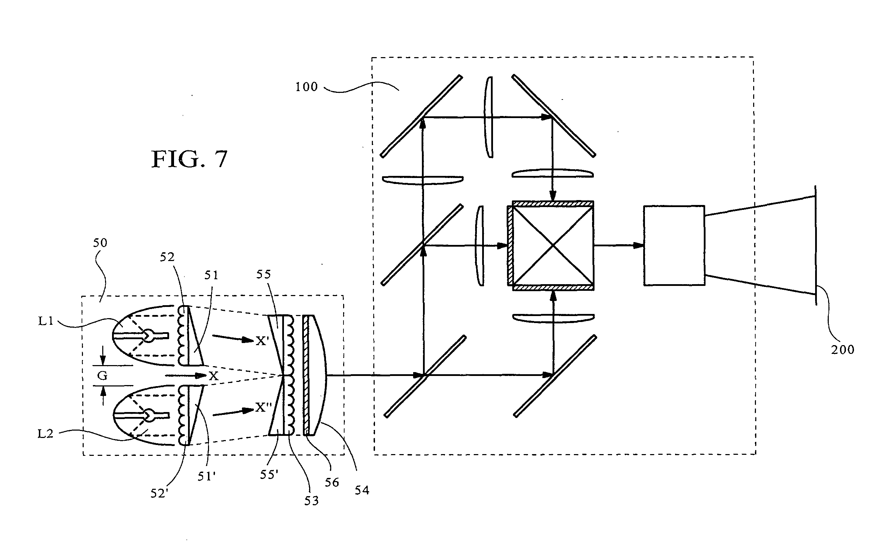

Referring to FIG. 7, it is a view showing the liquid crystal projector with two lamp/reflector assemblies of a fifth embodiment according to the present invention. The liquid crystal projector comprises a light module 50 and an optical module 100. The light module 50 comprises two lamp/reflector assemblies L1 and L2, two front lens arrays 52 and 52' positioned close to each lamp/reflector assemblies L1 and L2 in its optical path, a rear lens array 53 positioned at a distance away from the front lens arrays 52 and 52' in the optical path, two pairs of optical prisms, two front optical prisms 51, 51' and two rear optical prisms 55 and 55', positioned between the front lens arrays 52, 52' and the rear lens array 53, and a light polarizing element 56 and a condenser lens 54 positioned behind the rear lens array 53 at a short distance to provide polarized and uniform illumination to the optical module 100.

The lamp/reflector assemblies L1 and L2 in this embodiment are disposed such that their directions of output light propagation are substantially parallel. That is, both two lamp/reflector assemblies L1 and L2 illuminate their light toward X direction, as shown in FIG. 7. The light generated from the lamp/reflector assembly L1 passes through the front lens array 52 and then is refracted toward the X' direction via the front optical prism 51. The refracted light is then refracted again toward the X direction via the rear optical prism 55 and illuminates onto the upper part of the rear lens array 53. On the other hand, the light generated from the lamp/reflector assembly L2 passes through the front lens array 52' and then is refracted toward the X" direction via the front optical prism 51'. The refracted light is then refracted again toward the X direction via the rear optical prism 55' and illuminates onto the lower part of the rear lens array 53. The two light beams illuminated onto the rear lens array 53 are combined to form a larger light beam. The larger light beam is then illuminated to the optical module 100 via the light polarizing element 56 and the condenser lens 54. Due to there is a gap G between the two lamp/reflector assemblies L1 and L2, the light module 50 connects the two light beams at a predefine position by the two pairs of optical prisms 51, 51', 55 and 55'.

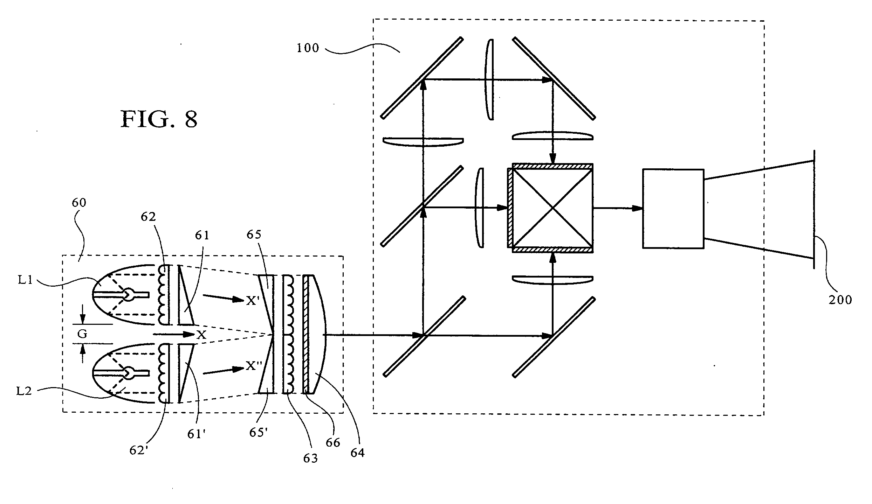

Referring to FIG. 8, it is a view showing the liquid crystal projector with two lamp/reflector assemblies of a sixth embodiment according to the present invention. The liquid crystal projector comprises a light module 60 and an optical module 100. This embodiment is approximately similar with the fifth embodiment mentioned above. But the difference is that the front optical prisms 61, 61' are detached from the front lens arrays 62, 62' and the rear optical prisms 65, 65' are detached from the rear lens array 63. That is, the front lens array and the front optical prism are mold together in the forth and fifth embodiments, but are detached in this embodiment.

The output light of the lamp/reflector assemblies L1 and L2 for above mentioned embodiments are reflected by the reflector (lampshade) into parallel light beams, therefore the reflected light will not illuminate onto the electrode. Accordingly, the lamp/reflector assembly has a longer lamp life. Moreover, because the light illuminated to the optical module is generated by two lamp/reflector assemblies, the illumination is more brightness than the illumination in the liquid crystal projector with single lamp/reflector assembly.

The liquid crystal projector with two light sources according to the present invention also comprises a controller to select one or two lamp/reflector assemblies. Therefore, the liquid crystal projector of the present invention will still work even through one of the two lamp/reflector assemblies is fail to offer an emergency solution.

## Claims

1. A liquid crystal projector with two light sources comprising a light module and an optical module, the optical module comprising a plurality of color separating filters, a plurality of full reflection mirrors, a plurality of LCD panels, a color mixer, and a projection lens, wherein the light module comprises:
two lamp/reflector assemblies, whose output light propagation directions are substantially orthogonal (at ∼ 90°);
a set of lens arrays, including two front lens arrays positioned close to each lamp/reflector assembly in its optical path and a rear lens array positioned at a distance away from the front lens arrays in the optical path to uniform the light illuminated from the lamp/reflector assemblies;
a reflection mirror, positioned between the front and rear lens arrays in one of the optical path, to reflect the light into the rear lens array; and
a condenser lens, positioned behind the rear lens array at a short distance, to provide uniform illumination on LCD panels in the optical module.

2. A liquid crystal projector with two light sources comprising a light module and an optical module, the optical module comprising a plurality of color separating filters, a plurality of full reflection mirrors, a plurality of LCD panels, a color mixer, and a projection lens, wherein the light module comprises:
two lamp/reflector assemblies, whose output light propagation directions are substantially opposite (at ∼ 180°);
a set of lens arrays, including two front lens arrays positioned close to each lamp/reflector assembly in its optical path and a rear lens array positioned at a distance away from the front lens arrays in the optical path to uniform the light illuminated from the lamp/reflector assemblies;
two reflection mirrors, positioned in the optical path between the front and rear lens arrays to reflect the light into the rear lens array; and
a condenser lens, positioned behind the rear lens array at a short distance to provide uniform illumination on LCD panels in the optical module.

3. A liquid crystal projector with two light sources comprising a light module and an optical module, the optical module comprising a plurality of color separating filters, a plurality of full reflection mirrors, a plurality of LCD panels, a color mixer, and a projection lens, wherein the light module comprises:
two lamp/reflector assemblies, positioned side by side separated from each other by a gap, whose output light propagation directions are substantially parallel;
a set of lens arrays, including two front lens arrays positioned close to each lamp/reflector assembly in its optical path and a rear lens array positioned at a distance away from the front lens arrays in the optical path;
a pairs of optical prisms, including a front optical prism and a rear optical prism, positioned between the front and rear lens arrays in one of the optical path to refract the light into the rear lens array; and
a condenser lens, positioned behind the rear lens arrays at a short distance to provide uniform illumination on LCD panels in the optical module.

4. A liquid crystal projector with two light sources comprising a light module and an optical module, the optical module comprising a plurality of color separating filters, a plurality of full reflection mirrors, a plurality of LCD panels, a color mixer, and a projection lens, wherein the light module comprises:
two lamp/reflector assemblies, positioned side by side separated from each other by a gap, whose output light propagation directions are substantially parallel;
a set of lens arrays, including two front lens arrays positioned close to each lamp/reflector assembly in its optical path and a rear lens array positioned at a distance away from the front lens arrays in the optical path;
two pairs of optical prisms, including two front optical prisms and two rear optical prisms, positioned between the front and rear lens arrays in the optical path to refract the light into the rear lens array; and
a condenser lens, positioned behind the rear lens arrays at a short distance to provide uniform illumination on the LCD panels in the optical module.

5. A liquid crystal projector with two light sources as claimed in claim 3 or 4, wherein the front optical prism can be molded with the front lens array, so does for the rear optical prism with the rear lens array.

6. A liquid crystal projector with two light sources comprising a light module and an optical module, the optical module comprising a plurality of color separating filters, a plurality of full reflection mirrors, a plurality of LCD panels, a color mixer, and a projection lens, wherein the light module comprises:
two lamp/reflector assemblies positioned side by side separated from each other by a gap, whose output light propagation directions are substantially parallel;
a set of lens array, including two front lens arrays positioned close to each lamp/reflector assembly in its optical path and a rear lens array positioned at a distance away from the front lens arrays in the optical path; and
a condenser lens, positioned behind the rear lens arrays at a short distance to provide uniform illumination on LCD panels in the optical module.

7. A liquid crystal projector with two light sources as claimed in claim 1, 2, 3, 4 or 6, further comprising a light polarizing element positioned at a distance away from the rear lens array to polarize the light from the rear lens array into P or S polarized light.

8. A liquid crystal projector with two light sources as claimed in claim 1, 2, 3, 4 or 6, further comprising a controller to power on one of or both of the two lamp/reflector assemblies.
